# EUROPEAN PATENT APPLICATION

(11) **EP 3 032 622 A1**
(43) Date of publication of application: **15.06.2016**
(21) Application number: 16150030.1
(22) Date of filing: 06.06.2011
(51) Int. Cl.: H01M 4/62, H01M 4/131, H01M 10/052, H01M 10/0585, H01M 4/36, H01M 4/133, H01M 4/134, H01M 4/485, H01M 4/525, H01M 10/04, H01M 10/42

(54) **NONAQUEOUS ELECTROLYTE SECONDARY BATTERY**

(30) Priority: 21.06.2010 JP 2010140753
(62) Divisional of application: 11797976.5
(71) Applicant: NEC Energy Devices, Ltd., Chuo-ku Sagamihara-shi Kanagawa 252-5298 (JP)
(72) Inventor: KAJITA, Tetsuya, Sagamihara-shi, Kanagawa, 252-5298 (JP); TAKAHASHI, Hiroo, Sagamihara-shi, Kanagawa, 252-5298 (JP); KASAHARA, Ryuichi, Sagamihara-shi, Kanagawa, 252-5298 (JP); IRIYAMA, Jiro, Sagamihara-shi, Kanagawa, 252-5298 (JP); NUMATA, Tatsuji, Sagamihara-shi, Kanagawa, 252-5298 (JP)
(74) Representative: Vossius & Partner Patentanwälte Rechtsanwälte mbB

(57) **Abstract**

There is provided a nonaqueous electrolyte secondary battery having high capacity in which the reduction in the capacity of the battery due to the irreversible capacity in the first charge and discharge is suppressed using a high capacity positive electrode. The nonaqueous electrolyte secondary battery according to the exemplary embodiment includes a positive electrode (6) and a negative electrode (3) comprising at least one negative electrode active material selected from the group consisting of Si, a Si oxide and carbon,wherein the positive electrode (6) comprises a positive electrode active material comprising an oxide capable of absorbing and releasing lithium and a transition metal oxide, the transition metal oxide being represented by Li₂MO₂ (wherein M is at least one of Cu and Ni) and including a square-planar coordination MO₄ structure, the square-planar coordination MO₄ structure forming a one-dimensional chain which shares an edge formed by two opposing oxygen atoms, wherein a relation Z ≤ Y is satisfied provided that Y represents a first charge capacity of the negative electrode, and Z represents a first charge capacity of the positive electrode, characterized in that a relation γ < α is satisfied provided that α represents an amount of Li corresponding to a first irreversible capacity of the negative electrode active material, and γ represents an amount of Li released during a first charge by the transition metal oxide, wherein the negative electrode comprises at least Si or a Si oxide as the negative electrode active material.

## Description

### Technical Field

The exemplary embodiment relates to a nonaqueous electrolyte secondary battery having high capacity in which a high capacity positive electrode active material is used for the positive electrode.

### Background Art

At present, with the spread of mobile devices such as cellular phones and notebook personal computers, a greater importance is placed on the role of a secondary battery used as the source of electric power. The secondary battery for these devices is required to be small and light, have high capacity, and have performance that does not easily deteriorate even through repeated charge and discharge, and a lithium ion secondary battery is most frequently used at present.

Carbon (C) such as graphite and hard carbon is mainly used for the negative electrode of the lithium ion secondary battery. A charge and discharge cycle can be satisfactorily repeated with carbon, but its capacity has already been used to that close to its theoretical capacity. Therefore, substantial improvement in capacity cannot be expected from carbon in future. On the other hand, the requirement of improvement in capacity of a lithium ion secondary battery is high, and a negative electrode material having higher capacity than carbon has been investigated.

Examples of the negative electrode material which can achieve high capacity include silicon (Si). A negative electrode using Si has high capacity in which a large amount of lithium ions is absorbed and released per unit volume. However, since the expansion and shrinkage of the electrode active material itself is large, the pulverization of the electrode active material proceeds when the lithium ions are absorbed and released, leading to a large irreversible capacity in first charge and discharge to form a part which is not used for the charge and discharge on the positive electrode side. It also has a problem that the charge and discharge cycle life is short.

Patent Literature 1 proposes a method of using a Si oxide as a negative electrode active material as a measure for reducing the first irreversible capacity and improving the charge and discharge cycle life using Si. In Patent Literature 1, the improvement in cycle characteristics is verified because the volume expansion and shrinkage per active material unit mass can be reduced by using a Si oxide as a negative electrode active material. On the other hand, since the oxide has a low conductivity, it has a problem of reduction in current collecting performance and a large irreversible capacity in charge and discharge.

Further, as a method for improving capacity and charge and discharge cycle life, Patent Literature 2 proposes a method of using, as a negative electrode active material, a particle in which Si and a Si oxide have formed a composite with a carbon material. Improvement in cycle characteristics is verified by this technique, but it is insufficient; and improvement in the first charge and discharge efficiency is also insufficient.

As a measure against the first irreversible capacity, a method of previously electrochemically charging the capacity corresponding to the irreversible capacity, a method of sticking metallic lithium to the negative electrode to compensate the irreversible capacity, and the like have been attempted. Although the method of previously electrochemically charging is excellent in that it allows charging depending on the purpose by controlling the quantity of electricity passed, it is complicated and extremely low in productivity because reassembling as a battery is required after the electrode is once charged. On the other hand, the method of sticking metallic lithium is a method in which Li is automatically transferred between an oxide and metallic lithium which are in a short circuit state by pouring an electrolyte solution. However, in the case of this method, the transfer of Li is insufficient and metallic lithium remains depending on the plate state, which poses a problem in the quality such as the occurrence of the variation in characteristics and a safety problem.

In addition to these, Patent Literature 3 proposes, as a measure against the first irreversible capacity, a nonaqueous electrolyte lithium ion secondary battery using a mixed active material including a Si oxide and a lithium-containing composite nitride represented by Li₃₋ₓMₓN (wherein M represents a transition metal, and 0 ≤ x ≤ 0.8) for the negative electrode. Although the proposed battery is excellent in terms of compensating the irreversible capacity of the Si oxide with the lithium-containing composite nitride, it has a problem that the capacity per mass of the lithium-containing composite nitride is as small as about 800 mAh/g compared with that of the Si oxide, and the energy density as a battery is small compared with the energy density of the battery in the case of using only the Si oxide as the negative electrode active material.

Although the capacity of a battery increases by using Si as a negative electrode material which can achieve high capacity, the increase in the capacity of the positive electrode is also required because the percentage that the positive electrode occupies in the total weight of the battery is higher.

On the other hand, Patent Literatures 4 and 5 describe the use of Li₂NiO₂ as a positive electrode active material.

### Citation List

### Patent Literature

Patent Literature 1: JP05-162958A
Patent Literature 2: JP2004-139886A
Patent Literature 3: JP2000-164207A
Patent Literature 4: JP10-208730A
Patent Literature 5: National Publication of International Patent Application No. 2008-547156

### Summary of Invention

### Technical Problem

As described above, when a Si-based negative electrode is used, the irreversible capacity in first charge and discharge is large, and a part which is not used for charge and discharge occurs on the positive electrode side. Therefore, the problem has been that the effect of the increase in the capacity of the Si-based negative electrode cannot sufficiently be obtained.

The exemplary embodiment has been made in order to solve such a problem, and the object of the present embodiment is to provide a nonaqueous electrolyte secondary battery having high capacity in which the reduction in the capacity per mass of the battery due to the irreversible capacity in first charge and discharge is suppressed to the minimum.

### Solution to Problem

The nonaqueous electrolyte secondary battery according to the exemplary embodiment includes a positive electrode and a negative electrode including at least one negative electrode active material selected from the group consisting of Si, a Si oxide and carbon, wherein the positive electrode includes a positive electrode active material including an oxide capable of absorbing and releasing lithium and a transition metal oxide, the transition metal oxide being represented by Li₂MO₂ (wherein M is at least one of Cu and Ni) and including a square-planar coordination MO₄ structure, the square-planar coordination MO₄ structure forming a one-dimensional chain which shares an edge formed by two opposing oxygen atoms, wherein the relation Z ≤ Y is satisfied provided that Y represents the first charge capacity of the negative electrode, and Z represents the first charge capacity of the positive electrode.

### Advantageous Effects of Invention

The exemplary embodiment can provide a nonaqueous electrolyte secondary battery having high capacity in which the reduction in the capacity per mass of the battery due to the irreversible capacity in the first charge and discharge is suppressed to the minimum.

### Brief Description of Drawing

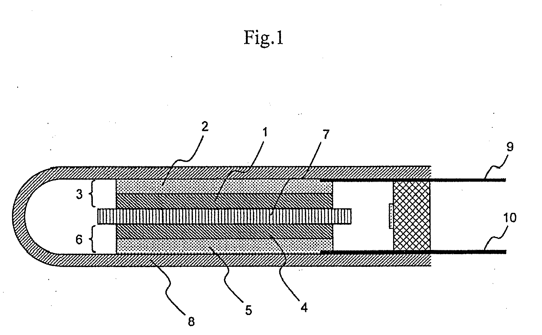

[Figure 1] Figure 1 is a sectional view of a laminate type secondary battery which is an example of the nonaqueous electrolyte secondary battery according to the exemplary embodiment.

### Description of Embodiments

The nonaqueous electrolyte secondary battery according to the exemplary embodiment includes a positive electrode and a negative electrode including at least one negative electrode active material selected from the group consisting of Si, a Si oxide and carbon, wherein the positive electrode includes a positive electrode active material including an oxide capable of absorbing and releasing lithium and a transition metal oxide, the transition metal oxide being represented by Li₂MO₂ (wherein M is at least one of Cu and Ni) and including a square-planar coordination MO₄ structure, the square-planar coordination MO₄ structure forming a one-dimensional chain which shares an edge formed by two opposing oxygen atoms, wherein the relation Z ≤ Y is satisfied provided that Y represents the first charge capacity of the negative electrode, and Z represents the first charge capacity of the positive electrode.

In the nonaqueous electrolyte secondary battery according to the exemplary embodiment, a transition metal oxide having higher capacity, represented by Li₂MO₂ (wherein M = Cu, Ni), and releasing Li only during the first charge is used as the positive electrode active material consumed by the first irreversible capacity characteristic of the at least one negative electrode active material selected from Si, a Si oxide and carbon. This reduces the mass of the positive electrode active material which is not used for the charge and discharge after the first discharge to thereby achieve a nonaqueous electrolyte secondary battery having high capacity.

In conventional lithium ion secondary batteries, Li is supplied from the positive electrode to the negative electrode active material in the negative electrode by the first charge operation, but in the next first discharge, an insufficiency (corresponding to the irreversible capacity) occurs in Li which returns from the negative electrode active material to the positive electrode. As a result, Li is no longer supplied to the whole positive electrode, and a positive electrode active material which does not participate in charge and discharge is produced in the positive electrode. Then, in the exemplary embodiment, the mass of the positive electrode active material is made lighter than in the case where only an oxide capable of absorbing and releasing lithium is used, by previously allowing a transition metal oxide to be contained in the positive electrode in an amount corresponding to the first irreversible capacity or in an amount corresponding to a part of the first irreversible capacity, the transition metal oxide being represented by Li₂MO₂ (wherein M = Cu, Ni) and having a larger capacity per unit mass than the oxide capable of absorbing and releasing lithium. As a result, the capacity per unit mass of the secondary battery can be increased. Note that the transition metal oxide represented by Li₂MO₂ (wherein M = Cu, Ni) is a substance which releases Li only at the first charge, and it does not contribute to the charge and discharge after the first discharge.

In the exemplary embodiment, the relation Z ≤ Y is satisfied provided that Y represents the first charge capacity of the negative electrode, and Z represents the first charge capacity of the positive electrode. Thereby, the whole positive electrode can be used for charge and discharge, and high capacity can be achieved. Note that, with respect to the charge and discharge performance of the negative electrode, the capacitance characteristics are verified between 1.5 V and 0.02 V with a model cell using metallic lithium as a counter electrode, and the value of the first charge capacity thereof is defined as the Y. Further, with respect to the charge and discharge performance of the positive electrode, the capacitance characteristics are verified between 4.3 V and 3.0 V with a model cell using metallic lithium as a counter electrode, and the value of the first charge capacity thereof is defined as the Z.

In the exemplary embodiment, the relation γ ≤ α is preferably satisfied provided that α represents the amount of Li corresponding to the first irreversible capacity of the negative electrode active material, and γ represents the amount of Li released during the first charge by a transition metal oxide represented by Li₂MO₂ (wherein M = Cu, Ni). This is because if the transition metal oxide represented by Li₂MO₂ (wherein M = Cu, Ni) in an amount exceeding the capacity corresponding to the irreversible capacity is mixed in the positive electrode (γ > α), an oxide capable of absorbing and releasing lithium in the positive electrode which accepts Li will be insufficient during the first discharge after performing the first charge, and the capacity per unit mass as a secondary battery may be reduced. Note that, with respect to the charge and discharge performance of the negative electrode active material, the capacitance characteristics are verified between 1.5 V and 0.02 V with a model cell using metallic lithium as a counter electrode, and the irreversible capacity is calculated from the difference between the capacity which can be charged to the negative electrode active material at the first charge and the capacity discharged at the next discharge; and the amount of Li corresponding to the calculated irreversible capacity is defined as α. Since the electrochemical reaction here involves only the exchange of Li, the relation Capacity (mAh) = The amount of Li (mAh) is obtained. Faraday's rule can be used when converting the unit (mAh) into the unit (g). Further, with respect to the γ, the amount of Li released during the first charge of the transition metal oxide represented by Li₂MO₂ (wherein M = Cu, Ni) is measured by verifying the capacitance characteristics between 4.3 V and 3.0 V with a model cell using metallic lithium as a counter electrode.

The relation A < B is preferably satisfied provided that A represents the charge and discharge capacity density per mass of an oxide capable of absorbing and releasing the lithium, and B represents the charge capacity density per mass of a transition metal oxide represented by the Li₂MO₂ (wherein M = Cu, Ni). This is because a higher first charge capacity is achieved as compared with the case where only the oxide capable of absorbing and releasing lithium is used as the positive electrode active material. Note that the A and B are the values measured by preparing a model cell using lithium metal as a counter electrode and subjecting it to a charge and discharge test between 4.3 V and 3.0 V.

### (Negative Electrode)

The negative electrode active material according to the exemplary embodiment is at least one selected from the group consisting of Si, a Si oxide and carbon. Examples of the Si oxide include silicon dioxide (SiO₂). Examples of the carbon include carbon which performs charge and discharge, such as graphite and hard carbon. These may be used alone or in combination of two or more thereof.

The negative electrode is prepared by forming, on a negative electrode collector, a mixture in which at least one negative electrode active material selected from the group consisting of Si, a Si oxide and carbon is mixed with a binder. The mixture can contain a solvent and can be processed into a well-known form by applying a paste kneaded with the solvent to a negative electrode collector such as copper foil followed by rolling to obtain a coated plate, or by directly pressing to obtain a pressed plate. Specifically, a method for preparing the negative electrode includes dispersing and kneading a Si powder, a Si oxide powder, a carbon powder, and a binder having a thermosetting property typified by polyimide, polyamide, polyamideimide, a polyacrylic acid resin, a polymethacrylic acid resin, and the like in a solvent such as N-methyl-2-pyrrolidone (NMP). The negative electrode can be prepared by applying the kneaded material on the negative electrode collector made of metal foil followed by drying in a high temperature atmosphere.

In order to impart conductivity, the negative electrode active material layer may be mixed if necessary with a material which does not perform charge and discharge such as carbon black and acetylene black, unlike the carbon as described above. The electrode density of the negative electrode active material layer is preferably 0.5 g/cm³ or more and 2.0 g/cm³ or less. If the electrode density is less than 0.5 g/cm³, the absolute value of the discharge capacity will be small, and an advantage over a carbon material may not be obtained. On the other hand, when the electrode density exceeds 2.0 g/cm³, it will be difficult to impregnate the electrode with an electrolyte solution, and the discharge capacity may be reduced. Since the thickness of the negative electrode collector is preferably a thickness that can maintain strength, it is preferably 4 to 100 µm, and in order to increase energy density, it is more preferably 5 to 30 µm.

### (Positive Electrode)

The positive electrode active material according to the exemplary embodiment includes an oxide capable of absorbing and releasing lithium and a transition metal oxide represented by Li₂MO₂ (wherein M is at least one of Cu and Ni (hereinafter, represented by M = Cu, Ni)).

Examples of the oxide capable of absorbing and releasing lithium include lithium nickelate (LiNiO₂), lithium manganate and lithium cobaltate. These may be used alone or in combination of two or more thereof.

The transition metal oxide represented by Li₂MO₂ (wherein M is at least one of Cu and Ni) may be Li₂CuO₂ or Li₂NiO₂, or M may include both Cu and Ni. Note that the transition metal oxide represented by Li₂MO₂ (wherein M = Cu, Ni) includes a square-planar coordination MO₄ structure, and the square-planar coordination MO₄ structure forms a one-dimensional chain which shares an edge formed by two opposing oxygen atoms. The square-planar coordination MO₄ structure refers to a unit contained in the structure of the transition metal oxide represented by Li₂MO₂ (wherein M = Cu, Ni), and it is a structure in which M (wherein M = Cu, Ni) and four Os are arranged on the same plane and which has four M-O bonds. Each square-planar coordination MO₄ structure shares an edge formed by two opposing O, and forms a one-dimensional chain structure as a whole. The transition metal oxide represented by Li₂MO₂ specifically has a structure represented by the following formula (1): 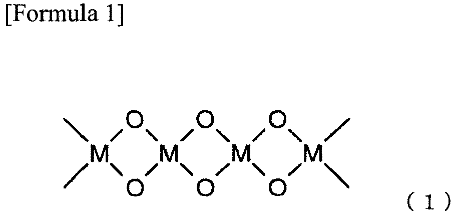 Note that the X-ray diffraction measurement allows verifying that Li₂MO₂ includes the structure.

The raw material of the transition metal oxide which is an irreversible oxide represented by Li₂MO₂ (wherein M = Cu, Ni) is Li, at least one transition metal selected from Ni and Cu, and oxygen, and the transition metal oxide is inexpensive. Further, since the transition metal oxide does not react with other substances and is stable compared with metallic lithium, it is excellent in the controllability on work and safety. In particular, Li₂CuO₂ is preferred in that it is resistant to water and can be synthesized in the air, as compared with Li₂NiO₂.

The positive electrode active material layer includes, for example, a positive electrode active material including the oxide capable of absorbing and releasing the lithium and a transition metal oxide represented by Li₂MO₂ (wherein M = Cu, Ni), a conducting agent such as carbon black and acetylene black for imparting conductivity, and a binder. The positive active material layer is formed by a mixture in which these components are mixed.

Specifically, a method for preparing the positive electrode includes dispersing and kneading an oxide powder capable of absorbing and releasing lithium, a transition metal oxide powder represented by Li₂MO₂ (wherein M = Cu, Ni), a conducting agent powder, and a binder typified by polyvinylidene fluoride, a vinylidene fluoride-hexafluoropropylene copolymer, a vinylidene fluoride-tetrafluoroethylene copolymer, and polytetrafluoroethylene in a solvent such as N-methyl-2-pyrrolidone (NMP) and dehydrated toluene. The positive electrode can be prepared by applying the kneaded material on the positive electrode collector made of metal foil followed by drying in a high temperature atmosphere.

The electrode density of the positive electrode active material layer is preferably 2.0 g/cm³ or more and 3.0 g/cm³ or less. When the electrode density is less than 2.0 g/cm³, the absolute value of the discharge capacity may be small. On the other hand, when the electrode density exceeds 3.0 g/cm³, it will be difficult to impregnate the electrode with an electrolyte solution, and the discharge capacity may be reduced. Since the thickness of the positive electrode collector is preferably a thickness that can maintain strength, it is preferably 4 to 100 µm, and in order to increase energy density, it is more preferably 5 to 30 µm.

### (Nonaqueous Electrolyte Secondary Battery)

Figure 1 shows a sectional view of a laminate type secondary battery which is an example of the nonaqueous electrolyte secondary battery according to the exemplary embodiment. The nonaqueous electrolyte secondary battery shown in Figure 1 has a structure in which a negative electrode 3 including a negative electrode collector 2 such as copper foil and a negative electrode active material layer 1 formed on the negative electrode collector 2, and a positive electrode 6 including a positive electrode collector 5 such as aluminum foil and a positive electrode active material layer 4 formed on the positive electrode collector 5 are oppositely arranged and laminated via a separator 7. As a separator 7, a porous film made of polyolefin such as polypropylene and polyethylene, a fluororesin, and the like can be used. From the negative electrode 3 and the positive electrode 6, a negative electrode lead tab 9 and a positive electrode lead tab 10 for taking out electrode terminals are drawn out, respectively. The battery is packaged with a laminate film 8 except the tips of the negative electrode lead tab 9 and the positive electrode lead tab 10. The inner part of the laminate film 8 is filled with an electrolyte solution.

One or a mixture of two or more of the following aprotic organic solvents is used for the electrolyte solution: cyclic carbonates such as propylene carbonate (PC), ethylene carbonate (EC), butylene carbonate (BC), and vinylene carbonate (VC); chain carbonates such as dimethyl carbonate (DMC), diethyl carbonate (DEC), ethyl methyl carbonate (EMC), and dipropyl carbonate (DPC); aliphatic carboxylates such as methyl formate, methyl acetate, and ethyl propionate; γ-lactones such as γ-butyrolactone; chain ethers such as 1,2-ethoxy ethane (DEE) and ethoxymethoxyethane (EME); cyclic ethers such as tetrahydrofuran and 2-methyltetrahydrofuran; dimethyl sulfoxide, 1,3-dioxolane, formamide, acetamide, dimethylformamide, dioxolane, acetonitrile, propylnitrile, nitromethane, ethyl monoglyme, triester phosphate, trimethoxymethane, dioxolane derivatives, sulfolane, methyl sulfolane, 1,3-dimethyl-2-imidazolidinone, 3-methyl-2-oxazolidinone, propylene carbonate derivatives, tetrahydrofuran derivatives, ethyl ether, 1,3-propanesultone, anisole, and N-methyl pyrrolidone. A solution prepared by dissolving a lithium salt which is soluble in any of the above organic solvents can be used as the electrolyte solution. Examples of the lithium salt include LiPF₆, LiAsF₆, LiAlCl₄, LiClO₄, LiBF₄, LiSbF₆, LiCF₃SO₃, LiCF₃CO₂, Li(CF₃SO₂)₂, LiN(CF₃SO₂)₂, LiB₁₀Cl₁₀, a lithium lower aliphatic carboxylate, chloroborane lithium, lithium tetraphenylborate, LiBr, LiI, LiSCN, LiCl, and imides. These may be used alone or in combination of two or more thereof. Further, a polymer electrolyte, a solid electrolyte and an ionic liquid may be used instead of the electrolyte solution.

The discharge final voltage value of the nonaqueous electrolyte secondary battery produced by the method as described above is preferably 1.5 V or more and 3.5 V or less. If the discharge final voltage value is less than 1.5 V, the degradation of the discharge capacity by the repetition of charge and discharge may be significant, and a discharge final voltage value of less than 1.5 V has a high difficulty in circuit design. On the other hand, if it exceeds 3.5 V, the absolute value of the discharge capacity will be small, and an advantage over a carbon material may not be obtained.

A method for producing a nonaqueous electrolyte secondary battery according to the exemplary embodiment includes: preparing a battery including at least the negative electrode and the positive electrode; and charging the battery followed by degassing. When the secondary battery is a laminate type secondary battery, the pressure applied between the electrodes is small as compared with the case of a winding type secondary battery. Therefore, if a gas is generated during the charge and discharge, the gas will accumulate between the electrodes, thus reducing the capacity. Since the transition metal oxide represented by the Li₂MO₂ (wherein M = Cu, Ni) releases oxygen gas during the first charge, the effect of the high capacity in the exemplary embodiment will be a little smaller in the case of a laminate type secondary battery. Therefore, a secondary battery having a sufficiently high capacity can be prepared by preparing a battery and degassing after charging the battery.

### Examples

### [Example 1]

### (Preparation of Negative Electrode)

In the present Example, a mixture having a molar ratio of Si, SiO₂ and carbon (C) of 1:1:0.8 was used as a negative electrode active material. There were used a Si powder as a Si raw material; a SiO₂ powder as a SiO₂ raw material; and a carbon powder as a carbon raw material, and these were mixed to obtain a negative electrode active material.

An electrode material in which a polyimide as a binder and NMP as a solvent were mixed with the negative electrode active material was applied on a copper foil having a thickness of 10 µm and dried at 125°C for 5 minutes. Subsequently, the electrode material was subjected to compression molding with a roll press and again subjected to drying treatment in a drying furnace at 350°C for 30 minutes in a N₂ atmosphere. The copper foil on which the negative electrode active material layer was formed was punched into a size of 30 x 28 mm to prepare the negative electrode. A negative electrode lead tab made of nickel for taking out electric charge was ultrasonically fused to the negative electrode.

The charge and discharge performance of the negative electrode was verified beforehand. To verify the charge and discharge performance, the capacitance characteristics between 1.5 V and 0.02 V were verified with a model cell using metallic lithium as a counter electrode. It was possible to charge the negative electrode active material to 2500 mAh/g at the first charge. Therefore, a value obtained by multiplying this value by the mass of the negative electrode active material is the first charge capacity Y (mAh) of the negative electrode. However, only 1650 mAh/g was discharged at the next discharge, and it had an irreversible capacity of 850 mAh/g. The amount of Li corresponding to the value obtained by multiplying this irreversible capacity by the mass of the negative electrode active material is α (mAh). The capacity in an amount of 34% was the irreversible capacity relative to the first charge capacity.

### (Preparation of Positive Electrode)

In the present Example, a powdered lithium nickelate was used as the oxide capable of absorbing and releasing lithium. The charge and discharge performance of the lithium nickelate was verified beforehand. To verify the charge and discharge performance, the capacitance characteristics between 4.3 V and 3.0 V were verified with a model cell using metallic lithium as a counter electrode. The first charge capacity of the lithium nickelate was 200 mAh/g.

Li₂CuO₂ was used as a transition metal oxide represented by Li₂MO₂ (wherein M = Cu, Ni). A material synthesized by a method to be described below was used as the Li₂CuO₂. A sintered body of Li₂CuO₂ was obtained by mixing a predetermined amount of CuO and Li₂CO₃, calcining the mixture in the air at 650°C for 24 hours, followed by firing at 800°C for 48 hours. The sintered body was ground to obtain a Li₂CuO₂ powder. Note that the steps from mixing to grinding were performed in a low humidity atmosphere (at a dew point of -30°C or less). When the Li₂CuO₂ powder was subjected to the powder X-ray diffraction measurement, it was verified that the Li₂CuO₂ powder had no impurity peak, included a square-planar coordination MO₄ structure, and the square-planar coordination MO₄ structure formed a one-dimensional chain which shares an edge formed by two opposing oxygen atoms.

Next, the amount of Li released by the Li₂CuO₂ during the first charge was verified beforehand. To verify the above, the capacitance characteristics between 4.3 V and 3.0 V were verified with a model cell using metallic lithium as a counter electrode. The amount of Li released by Li₂CuO₂ during the first charge was 400 mAh/g as the first charge capacity.

In the exemplary embodiment, two types of positive electrode active materials are used to prepare the positive electrode, wherein a value obtained by multiplying the amount of Li released during the first charge by the Li₂CuO₂ in the mixed positive electrode active materials by the mass of Li₂CuO₂ is γ(mAh).

The charge and discharge capacity density per mass of the lithium nickelate (A) was 200 mAh/g. Further, the charge capacity density per mass of the Li₂CuO₂ (B) was 400 mAh/g. Therefore, the relation A < B is satisfied.

In the present Example, the positive electrode was prepared as follows. First, an electrode material was prepared in which the lithium nickelate, the Li₂CuO₂, polyvinylidene fluoride as a binder and NMP as a solvent were mixed. This was applied on an aluminum foil having a thickness of 20 µm and subjected to drying treatment at 125°C for 5 minutes to prepare a positive electrode active material layer. This was punched into a size of 30 × 28 mm to prepare the positive electrode. A positive electrode lead tab made of aluminum for taking out electric charge was ultrasonically fused to the positive electrode.

The charge and discharge performance of the positive electrode was verified beforehand. To verify the charge and discharge performance, the capacitance characteristics between 4.3 V and 3.0 V were verified with a model cell using metallic lithium as a counter electrode.

### (Preparation of Laminate Type Secondary Battery)

The laminate type secondary battery was prepared by laminating the negative electrode, a separator and the positive electrode in this order so that each active material layer may face the separator, then packaging the laminate with a laminate film, pouring an electrolyte solution, and sealing the battery in a vacuum. Note that 1 mol/L of LiPF₆ was dissolved in a mixed solvent of EC, DEC and EMC in a volume ratio of 3:5:2, and the resulting solution was used as the electrolyte solution.

When the laminate type secondary battery was prepared, the mass ratio of the negative electrode to the positive electrode was selected so that the relation between the first charge capacity Y of the negative electrode and the first charge capacity Z of the positive electrode might be represented by the relation Y = Z. Further, the mass ratio of the negative electrode active material to Li₂CuO₂ was selected so that the relation between the amount of Li, α, corresponding to the first irreversible capacity of the negative electrode active material and the amount of Li, γ, released by Li₂CuO₂ during the first charge might be represented by the relation α = γ.

The charge and discharge test of the laminate type secondary battery prepared as described above was performed by setting the charge final voltage to 4.2 V and the discharge final voltage to 2.5 V at a constant current of 3 mA. Note that, after the first charge, the laminate part of the secondary battery was holed and degassed, and the holed part was sealed in a vacuum, followed by charge and discharge. Table 1 shows the charge capacity per gross mass (mAh/g) of the positive electrode active material layer during the first and second charges in this charge and discharge test.

### [Examples 2 to 4]

When each of the laminate type secondary batteries was prepared, the mass ratio of the negative electrode to the positive electrode was selected so that the relation of Y:Z between the first charge capacity Y of the negative electrode and the first charge capacity Z of the positive electrode might be the values as shown in Table 1. Further, as the positive electrode, there was used an electrode in which the positive electrode active materials were mixed so that the relation α = γ might be obtained. Other than the above, a laminate type secondary battery was prepared and evaluated in the same manner as in Example 1. The results are shown in Table 1.
[Table 1]

**[Table 1]**

| | Y:Z | First charge capacity (mAh/g) | Second charge capacity (mAh/g) |
|---|---|---|---|
| Example 1 | 1.00:1.00 | 257.0 | 148.0 |
| Example 2 | 1.10:1.00 | 257.2 | 148.1 |
| Example 3 | 1.16:1.00 | 257.1 | 148.1 |
| Example 4 | 1.26:1.00 | 256.9 | 147.6 |

As shown in Table 1, in the laminate type secondary batteries of Examples 1 to 4, the difference between the first charge capacity and the second charge capacity is small, and it is found that the reduction in the capacity by the irreversible capacity of the negative electrode active material containing Si, SiO₂ and carbon is suppressed. Further, these secondary batteries showed high charge capacity.

In the secondary battery according to the exemplary embodiment, the capacity per mass of the negative electrode active material at the second charge is determined by the ratio of Y to Z. The capacity per mass of the negative electrode active material at the second charge of Examples 1 to 4 is shown in Table 2.
[Table 2]

**[Table 2]**

| | Y:Z | Capacity of the negative electrode active material at the second charge (mAh/g) |
|---|---|---|
| Example 1 | 1.00:1.00 | 1525.1 |
| Example 2 | 1.10:1.00 | 1387.3 |
| Example 3 | 1.16:1.00 | 1315.5 |
| Example 4 | 1.26:1.00 | 1211.5 |

Taking it into consideration that the carbon material of the negative electrode of the lithium ion battery practically used at present has a capacity density of about 300 to 370 mAh/g, the secondary battery according to the exemplary embodiment has extremely high capacity, and it has been verified that a secondary battery having high energy density can be achieved.

### [Examples 5 to 8]

Li₂NiO₂ was used as a transition metal oxide represented by Li₂MO₂ (wherein M = Cu, Ni). When each of the laminate type secondary batteries was prepared, the mass ratio of the negative electrode to the positive electrode was selected so that the relation of Y:Z between the first charge capacity Y of the negative electrode and the first charge capacity Z of the positive electrode might be the values as shown in Table 3, and as the positive electrode, there was used an electrode in which the positive electrode active materials were mixed so that the relation α = γ might be obtained. Other than the above, each laminate type secondary battery was prepared and evaluated in the same manner as in Example 1. The results are shown in Table 3.

Note that a material synthesized by a method to be described below was used as Li₂NiO₂. A target sintered body of Li₂NiO₂ was obtained by mixing a predetermined amount of NiO and Li₂O and heating the mixture in a reducing atmosphere at 700°C for 48 hours. The sintered body was ground to obtain a Li₂NiO₂ powder. Note that the steps from mixing to grinding were performed in a low humidity atmosphere (at a dew point of -30°C or less). When the Li₂NiO₂ powder was subjected to the powder X-ray diffraction measurement, it was verified that the Li₂NiO₂ powder had no impurity peak, included a square-planar coordination MO₄ structure, and the square-planar coordination MO₄ structure formed a one-dimensional chain which shares an edge formed by two opposing oxygen atoms.

The amount of Li released by the Li₂NiO₂ during the first charge was verified beforehand. To verify the above, the capacitance characteristics between 4.3 V and 3.0 V were verified with a model cell using metallic lithium as a counter electrode. The amount of Li released by Li₂NiO₂ during the first charge was 450 mAh/g as the first charge capacity. This value is γ (mAh) per 1 g of Li₂NiO₂. Thus, since the transition metal oxide represented by Li₂MO₂ (wherein M = Cu, Ni) has a larger first charge capacity than the oxide capable of absorbing and releasing lithium, the use of a transition metal oxide represented by Li₂MO₂ (wherein M = Cu, Ni) for the positive electrode can provide a high capacity battery.

Further, the charge capacity density per mass of the Li₂NiO₂ was 450 mAh/g. Therefore, the relation A < B is satisfied. Further, the charge and discharge performance of the positive electrode containing the Li₂NiO₂ was verified beforehand. The method for measuring the charge and discharge performance is the same as that of Example 1. Z (mAh) of the positive electrode of Examples 5 to 8 was determined from this value.
[Table 3]

**[Table 3]**

| | Y:Z | First charge capacity (mAh/g) | Second charge capacity (mAh/g) |
|---|---|---|---|
| Example 5 | 1.00:1.00 | 263.5 | 151.8 |
| Example 6 | 1.10:1.00 | 263.6 | 151.7 |
| Example 7 | 1.16:1.00 | 263.8 | 151.6 |
| Example 8 | 1.26:1.00 | 263.7 | 151.6 |

As shown in Table 3, in the laminate type secondary battery of Examples 5 to 8, the difference between the first charge capacity and the second charge capacity is small, and it is found that the reduction in the capacity by the irreversible capacity of the negative electrode active material containing Si, SiO₂ and carbon is suppressed.

### [Examples 9 to 16]

The mass ratio of the negative electrode active material to Li₂CuO₂ was selected so that the relation between the amount of Li, α, corresponding to the first irreversible capacity of the negative electrode active material and the amount of Li, γ, released by Li₂CuO₂ during the first charge might be represented by the relation α = 2γ in Examples 9 to 12 and the relation α = 3γ in Examples 13 to 16. Further, when each of the laminate type secondary batteries was prepared, the mass ratio of the negative electrode to the positive electrode was selected so that the relation of Y:Z between the first charge capacity Y of the negative electrode and the first charge capacity Z of the positive electrode might be the values as shown in Tables 4 and 5. Other than the above, each laminate type secondary battery was prepared and evaluated in the same manner as in Example 1. The results are shown in Tables 4 and 5.
[Table 4]

**[Table 4]**

| | Y:Z | First charge capacity (mAh/g) | Second charge capacity (mAh/g) |
|---|---|---|---|
| Example 9 | 1.00:1.00 | 233.5 | 133.5 |
| Example 10 | 1.10:1.00 | 233.4 | 132.6 |
| Example 11 | 1.16:1.00 | 233.6 | 133.3 |
| Example 12 | 1.26:1.00 | 233.5 | 133.2 |

[Table 5]

**[Table 5]**

| | Y:Z | First charge capacity (mAh/g) | Second charge capacity (mAh/g) |
|---|---|---|---|
| Example 13 | 1.00:1.00 | 226.5 | 130.5 |
| Example 14 | 1.10:1.00 | 226.3 | 130.4 |
| Example 15 | 1.16:1.00 | 226.2 | 130.4 |
| Example 16 | 1.26:1.00 | 226.5 | 130.5 |

As shown in Table 4 and Table 5, a secondary battery having high capacity has also been obtained in the case of the relation γ < α.

### [Examples 17 and 18]

In Example 17, a laminate type secondary battery was prepared in the same manner as in Example 1, and the battery was evaluated in the same manner as in Example 1 except that, in the charge and discharge test, degassing was not performed after the first charge. Further, in Example 18, a battery was prepared and evaluated in the same manner as in Example 1 except that a laminate type secondary battery prepared by winding a laminate of a positive electrode, a separator and a negative electrode was used. The results are shown in Table 6.
[Table 6]

**[Table 6]**

| | Y:Z | First charge capacity (mAh/g) | Second charge capacity (mAh/g) | Charge capacity retention rate (%) |
|---|---|---|---|---|
| Example 17 | 1.00:1.00 | 256.8 | 142.1 | 55.3 |
| Example 18 | 1.00:1.00 | 257.1 | 147.9 | 57.5 |

In Example 17, although the reduction in capacity was suppressed, the suppression effect of the reduction in capacity was smaller than the case of Example 1 in which degassing was performed. Further, the secondary battery of Example 18 showed substantially the same performance as that of the laminate type secondary battery of Example 1.

### [Comparative Examples 1 to 3]

When each of the laminate type secondary batteries was prepared, the mass ratio of the negative electrode to the positive electrode was selected so that the relation of Y:Z between the first charge capacity Y of the negative electrode and the first charge capacity Z of the positive electrode might be the values as shown in Table 7. Other than the above, each laminate type secondary battery was prepared and evaluated in the same manner as in Example 1. The results are shown in Table 7.
[Table 7]

**[Table 7]**

| | Y:Z | First charge capacity (mAh/g) | Second charge capacity (mAh/g) |
|---|---|---|---|
| Comparative Example 1 | 0.50:1.00 | 116.7 | 67.3 |
| Comparative Example 2 | 0.70:1.00 | 168.7 | 97.7 |
| Comparative Example 3 | 0.80:1.00 | 197.7 | 113.8 |

Since the secondary batteries according to Comparative Examples 1 to 3 have the relation of Y:Z which does not satisfy the relation Z ≤ Y, that is, the relation Z > Y, it was verified that both the first charge capacity and the second charge capacity were lower than those of the corresponding Examples described in Table 1.

### [Examples 19 to 26]

The mass ratio of the negative electrode active material to Li₂CuO₂ was selected so that the relation between the amount of Li, α, corresponding to the first irreversible capacity of the negative electrode active material and the amount of Li, γ, released by Li₂CuO₂ during the first charge might be represented by the relation 2α = γ in Examples 19 to 22 and the relation 5α = 2γ in Examples 23 to 26. Further, when each of the laminate type secondary batteries was prepared, the mass ratio of the negative electrode to the positive electrode was selected so that the relation of Y:Z between the first charge capacity Y of the negative electrode and the first charge capacity Z of the positive electrode might be the values as shown in Tables 8 and 9. Other than the above, each laminate type secondary battery was prepared and evaluated in the same manner as in Example 1. The results are shown in Tables 8 and 9.
[Table 8]

**[Table 8]**

| | Y:Z | First charge capacity (mAh/g) | Second charge capacity (mAh/g) |
|---|---|---|---|
| Example 19 | 1.00:1.00 | 320.8 | 80.8 |
| Example 20 | 1.10:1.00 | 321.1 | 81.0 |
| Example 21 | 1.16:1.00 | 320.4 | 80.5 |
| Example 22 | 1.26:1.00 | 320.5 | 81.1 |

[Table 9]

**[Table 9]**

| | Y:Z | First charge capacity (mAh/g) | Second charge capacity (mAh/g) |
|---|---|---|---|
| Example 23 | 1.00:1.00 | 368.1 | 33.0 |
| Example 24 | 1.10:1.00 | 368.0 | 33.1 |
| Example 25 | 1.16:1.00 | 367.8 | 33.1 |
| Example 26 | 1.26:1.00 | 367.3 | 33.3 |

The secondary batteries according to Examples 19 to 26 do not satisfy the relation γ≤ α, that is, it has the relation α < γ. In these secondary batteries, it was verified that the charge capacity at the second charge was reduced, but it was to a degree of no practical problem.

### [Comparative Examples 4 and 5]

When each of the laminate type secondary batteries was prepared using only lithium nickelate as the positive electrode active material, the mass ratio of the negative electrode to the positive electrode was selected so that the relation ofY:Z between the first charge capacity Y of the negative electrode and the first charge capacity Z of the positive electrode might be the values as shown in Table 10. Other than the above, each laminate type secondary battery was prepared and evaluated in the same manner as in Example 1. The results are shown in Table 10.
[Table 10]

**[Table 10]**

| | Y:Z | First charge capacity (mAh/g) | Second charge capacity (mAh/g) |
|---|---|---|---|
| Comparative Example 4 | 1.00:1.00 | 213 | 123.1 |
| Comparative Example 5 | 1.10:1.00 | 212 | 123.0 |

As compared with the corresponding secondary batteries of Examples, the charge capacity per the gross mass of the positive electrode active material layer during the first and the second charge was small.

Thus, it has been verified that a high capacity nonaqueous electrolyte secondary battery is obtained by using a transition metal oxide represented by Li₂MO₂ (wherein M = Cu, Ni) having higher capacity as the positive electrode active material consumed by the first irreversible capacity characteristic of the negative electrode active material including at least one selected from Si, a Si oxide and carbon to thereby reduce the mass of the positive electrode active material which is not used for the charge and discharge after the first discharge.

This application claims the priority based on Japanese Patent Application No. 2010-140753 filed on June 21, 2010, the disclosure of which is incorporated herein in its entirety.

Hereinabove, the present invention has been described with reference to exemplary embodiments and Examples, but the present invention is not limited to the above exemplary embodiments and Examples. Various modifications which those skilled in the art can understand can be made to the constitution and details of the present invention within the scope of the present invention.

### Reference Signs List

- 1: Negative Electrode Active Material Layer
- 2: Negative Electrode Collector
- 3: Negative Electrode
- 4: Positive Electrode Active Material Layer
- 5: Positive Electrode Collector
- 6: Positive Electrode
- 7: Separator
- 8: Laminate Film
- 9: Negative Electrode Lead Tab
- 10: Positive Electrode Lead Tab

The invention further relates to the following items:
[Item 1] A nonaqueous electrolyte secondary battery comprising a positive electrode and a negative electrode comprising at least one negative electrode active material selected from the group consisting of Si, a Si oxide and carbon,
   wherein the positive electrode comprises a positive electrode active material comprising an oxide capable of absorbing and releasing lithium and a transition metal oxide, the transition metal oxide being represented by Li₂MO₂ (wherein M is at least one of Cu and Ni) and including a square-planar coordination MO₄ structure, the square-planar coordination MO₄ structure forming a one-dimensional chain which shares an edge formed by two opposing oxygen atoms,
   wherein a relation Z ≤ Y is satisfied provided that Y represents a first charge capacity of the negative electrode, and Z represents a first charge capacity of the positive electrode.
[Item 2] The nonaqueous electrolyte secondary battery according to item 1, wherein a relation γ ≤ α is satisfied provided that α represents an amount of Li corresponding to a first irreversible capacity of the negative electrode active material, and γ represents an amount of Li released during a first charge by the transition metal oxide.
[Item 3] The nonaqueous electrolyte secondary battery according to item 1 or 2, wherein a relation A < B is satisfied provided that A represents a charge and discharge capacity density per mass of the oxide capable of absorbing and releasing lithium, and B represents a charge capacity density per mass of the transition metal oxide.
[Item 4] The nonaqueous electrolyte secondary battery according to any one of items 1 to 3, wherein the nonaqueous electrolyte secondary battery is a laminate type secondary battery.
[Item 5] A method for producing a nonaqueous electrolyte secondary battery according to item 4 comprising:
   preparing a battery comprising at least the negative electrode and the positive electrode; and
   charging the battery followed by degassing.

## Claims

1. A nonaqueous electrolyte secondary battery comprising a positive electrode (6) and a negative electrode (3) comprising at least one negative electrode active material selected from the group consisting of Si, a Si oxide and carbon,
wherein the positive electrode (6) comprises a positive electrode active material comprising an oxide capable of absorbing and releasing lithium and a transition metal oxide, the transition metal oxide being represented by Li₂MO₂ (wherein M is at least one of Cu and Ni) and including a square-planar coordination MO₄ structure, the square-planar coordination MO₄ structure forming a one-dimensional chain which shares an edge formed by two opposing oxygen atoms,
wherein a relation Z ≤ Y is satisfied provided that Y represents a first charge capacity of the negative electrode, and Z represents a first charge capacity of the positive electrode,
**characterized in that** a relation γ < α is satisfied provided that α represents an amount of Li corresponding to a first irreversible capacity of the negative electrode active material, and γ represents an amount of Li released during a first charge by the transition metal oxide,
wherein the negative electrode comprises at least Si or a Si oxide as the negative electrode active material,
wherein, with respect to the charge and discharge performance of the negative electrode, the capacitance characteristics are verified between 1.5 V and 0.02 V with a model cell using metallic lithium as a counter electrode, and the value of the first charge capacity thereof is defined as Y,
wherein, with respect to the charge and discharge performance of the positive electrode, the capacitance characteristics are verified between 4.3 V and 3.0 V with a model cell using metallic lithium as a counter electrode, and the value of the first charge capacity thereof is defined as Z,
wherein, with respect to the charge and discharge performance of the negative electrode active material, the capacitance characteristics are verified between 1.5 V and 0.02 V with a model cell using metallic lithium as a counter electrode, and the irreversible capacity is calculated from the difference between the capacity which can be charged to the negative electrode active material at the first charge and the capacity discharged at the next discharge; and the amount of Li corresponding to the calculated irreversible capacity is defined as α, and
wherein, with respect to the γ, the amount of Li released during the first charge of the transition metal oxide represented by Li₂MO₂ (wherein M = Cu, Ni) is measured by verifying the capacitance characteristics between 4.3 V and 3.0 V with a model cell using metallic lithium as a counter electrode.

2. The nonaqueous electrolyte secondary battery according to claim 1, wherein a relation A < B is satisfied provided that A represents a charge and discharge capacity density per mass of the oxide capable of absorbing and releasing lithium, and B represents a charge capacity density per mass of the transition metal oxide, and wherein A and B are the values measured by preparing a model cell using lithium metal as a counter electrode and subjecting it to a charge and discharge test between 4.3 V and 3.0 V.

3. The nonaqueous electrolyte secondary battery according to claim 1 or 2, wherein the nonaqueous electrolyte secondary battery is a laminate type secondary battery.

4. The nonaqueous electrolyte secondary battery according to any one of claims 1 to 3, wherein the negative electrode active material comprises the Si oxide.

5. The nonaqueous electrolyte secondary battery according to any one of claims 1 to 3, wherein the negative electrode active material comprises the Si and the Si oxide.

6. A method for producing a nonaqueous electrolyte secondary battery according to any one of claims 1 to 5, comprising:
preparing a battery comprising at least the negative electrode and the positive electrode; and
charging the battery followed by degassing.
